# EUROPÄISCHE PATENTANMELDUNG

(11) **EP 1 696 322 A1**
(43) Veröffentlichungstag der Anmeldung: **30.08.2006**
(21) Anmeldenummer: 06003612.6
(22) Anmeldetag: 22.02.2006
(51) Int. Cl.: G06F 9/445, H04L 29/06

(54) **Verfahren und System zur Verwaltung von Objekten eines mobilen Endgerätes**

(30) Priorität: 28.02.2005 DE 102005009014
(71) Anmelder: Vodafone Holding GmbH, 40213 Düsseldorf (DE)
(72) Erfinder: Selmayr, Peter, 83101 Rohrdorf (DE)
(74) Vertreter: Müller, Thomas

(57) **Zusammenfassung**

Es wird unter anderem ein Verfahren zum Verwalten von Objekten für mindestens ein mobiles Endgerät (10) beschrieben, wobei das mobile Endgerät (10) mit zumindest einer zentralen Rechnereinheit (11) zumindest zeitweise in Kommunikationsverbindung steht. Das Verfahren zeichnet sich dadurch aus, dass in der zentralen Rechnereinheit (11) jedem Objekt eine Referenz zugeordnet wird und die Objektreferenzen so abgelegt werden, dass bei Veränderung eines Objekts in einer Managementeinheit (110), in der die Veränderungen aller Objekte gemeinsam verwaltet werden, der Objektreferenz, die diesem Objekt zugeordnet ist, ein Objektreferenzschlüssel - eine so genannte Update-ID zugeordnet wird, wobei die Objektreferenzschlüssel fortlaufend unabhängig von dem Objekt vergeben werden. Durch die Vergabe einer zentralen ID wird es möglich ein Aktualisieren einzelner Objekte auf einem mobilen Endgerät (10) auf einfache Weise zu realisieren. Weiterhin wird ein System zum Durchführen dieses Verfahrens beschrieben.

## Beschreibung

Die vorliegende Erfindung betrifft ein Verfahren und ein System zur Verwaltung von Objekten eines mobilen Endgerätes.

Mobile Endgeräte werden heutzutage in vielerlei technischen Gebieten und zu unterschiedlichen Zwecken eingesetzt. So sind Mobiltelefone genauso bekannt, wie mobile Endgeräte, die beispielsweise einem Fahrzeug zugeordnet werden und dort beispielsweise zur Navigationsunterstützung des Fahrers oder zur Überwachung der Position des Fahrzeuges, insbesondere einer Überwachung des Einfahrens in und Ausfahrens aus einem gebührenpflichtigen Gebiet, dienen können.

Mobile Endgeräte sind hierbei in der Regel mit mindestens einer zentralen Rechnereinheit in Verbindung, um mit dieser zu kommunizieren. Das Endgerät selber erhält in der Regel seine Funktionsfähigkeit durch eine in diesem implementierte Software und Nutzdaten. Diese Betriebsinformationen des Endgerätes bestehen in der Regel aus vielen einzelnen Modulen, Files und/oder Datenbankeinträgen. Im Laufe der Zeit müssen diese Objekte durch neue oder geänderte Objekte ausgetauscht werden, um geänderten Umgebungsbedingungen Rechnung tragen zu können oder um technische Weiterentwicklungen in dem System implementieren zu können.

Um unterschiedliche Versionen von Objekten innerhalb einer Software oder innerhalb der Nutzdaten berücksichtigen zu können, wird ein so genanntes Versionsmanagement verwendet. In einem klassischen Versionsmanagement wird eine Gruppe von Objekten einer Versionierung unterzogen, das heißt eine Versionsangabe wird mit den entsprechenden Objekten gemeinsam abgelegt beziehungsweise diesen zugeordnet.

Um einen Versionsabgleich durchführen zu können, muss im klassischen Versionsmanagement die Version jeden Objektes des mobilen Endgerätes mit dem aktuellen Stand, das heißt der aktuellen Version der Objektgruppe aus dem Versionsmanagement verglichen werden. Bei einer Abweichung werden dann die entsprechenden Objekte aktualisiert beziehungsweise gegebenenfalls gelöscht. Bei mobilen Endgeräten, die über eine teuere und langsame Luftschnittstelle an das Versionsmanagement angebunden sind, kann bereits der Versionsabgleich zu einem hohen Datenaufkommen und damit zu hohen Kosten führen, da alle Objekte über die Luftschnittstelle abgeglichen werden müssen.

Wird bei einem Versionsmanagement nach dem Stand der Technik nun von einem mobilen Endgerät ein Update angefordert, ist es die Aufgabe des Versionsmanagements, alle notwendigen Schritte für das Update herauszuarbeiten. Insbesondere muss geprüft werden, welche der vorhandenen Objekte und in welcher Reihenfolge neu hinzugefügt, geändert oder gelöscht werden müssen, um von einem Versionsstand A zum aktuellen Versionsstand B zu gelangen. Weiterhin müssen das mobile Endgerät aber auch das Versionsmanagement dabei in der Lage sein, mit inkonsistenten Objektzuständen umgehen zu können, da das mobile Endgerät jederzeit abgeschaltet werden kann. Aus diesem Grund sind zusätzliche Aufsetzmechanismen notwendig. Erst nach dem kompletten Aufspielen aller notwendigen Objekte in das mobile Endgerät kann und darf der eigentliche Update-Prozess durchgeführt werden.

In der DE 198 42 779 A1 wird ein Verfahren zum Laden von Daten und Software in einen Fahrzeugcomputer beschrieben. Hierbei wird der Ladezustand einer On-board-Unit (OBU) von einem Download-Server überprüft und fehlende oder auszutauschende Datenblöcke werden bestimmt. Zur Feststellung des Ladezustandes müssen gemäß dem beschriebenen Verfahren alle Datenblöcke, die den Ladezustand definieren, an den Download-Server übermittelt werden. Dies ist aber insbesondere, da die OBU's mit dem Downloadserver über eine Luftschnittstelle kommunizieren, von Nachteil.

Ausgehend von diesem Stand der Technik liegt der vorliegenden Erfindung somit die Aufgabe zugrunde ein Verfahren und System zum Verwalten von Objekten für ein mobiles Endgerät bereitzustellen, die einen geringen Aufwand zur Ermittlung der Notwendigkeit einer Aktualisierung eines mobilen Endgerätes benötigen und zudem eine schnelle und zuverlässige Aktualisierung von Objekten auf einem mobilen Endgerät erlauben.

Der Erfindung liegt die Erkenntnis zugrunde, dass diese Aufgabe gelöst werden kann, indem die Objekte für mobile Endgeräte geräteunabhängig zentral verwaltet werden.

Gemäß einem ersten Aspekt wird diese Aufgabe gelöst durch ein Verfahren zum Verwalten von Objekten für mindestens ein mobiles Endgerät, wobei das mobile Endgerät mit zumindest einer zentralen Rechnereinheit zumindest zeitweise in Kommunikationsverbindung steht. Das Verfahren zeichnet sich dadurch aus, dass in der zentralen Rechnereinheit jedem Objekt eine Referenz zugeordnet wird und die Objektreferenzen so abgelegt werden, dass bei Veränderung eines Objekts in einer Managementeinheit, in der die Veränderungen aller Objekte gemeinsam verwaltet werden, der Objektreferenz, die diesem Objekt zugeordnet ist, ein Objektreferenzschlüssel zugeordnet wird, wobei die Objektreferenzschlüssel fortlaufend und unabhängig von dem Objekt vergeben werden.

Der Objektreferenzschlüssel wird im Folgenden auch als Update-ID bezeichnet und kann eine numerische, eine alphabetische oder eine alphanumerische Zeichenfolge darstellen.

Indem die Objekte für die mobilen Endgeräte in einer gemeinsamen Managementeinheit verwaltet werden, kann der Objektreferenzschlüssel unabhängig von den einzelnen Objekten vergeben werden. Unabhängig von den einzelnen Objekten bedeutet in diesem Zusammenhang, dass der Objektreferenzschlüssel nicht in Bezug auf ein Objekt fortlaufend beziehungsweise sequentiell vergeben wird, sondern, dass vielmehr erfindungsgemäß bei jeder Veränderung eines Objektes ein fortlaufender Schlüssel vergeben wird. Auf diese Weise kann durch eine einzige Angabe, nämlich den Objektreferenzschlüssel der Zustand aller in der Managementeinheit verwalteten Objekte dargestellt werden. Die Überprüfung der Notwendigkeit einer Aktualisierung der Objekte auf dem Endgerät kann hierdurch auf einfache Weise realisiert werden. Insbesondere muss die Überprüfung nicht objektbezogen für jedes einzelne Objekt durchgeführt werden. Indem zusätzlich lediglich Objekte, die geändert wurden, in der Managementeinheit mit dem entsprechenden Objektreferenzschlüssel versehen werden, ist der Verwaltungsaufwand für die Objekte weiter vereinfacht.

Im Rahmen der Erfindung ist es möglich, dass einem Objekt beziehungsweise der Objektreferenz zu einem Zeitpunkt ein Objektreferenzschlüssel und zu einem späteren Zeitpunkt ein anderer Objektreferenzschlüssel zugeordnet wird. Dies tritt bei mehrfacher Änderung eines Objektes auf.

Wie oben bereits beschrieben, können die Objekte beispielsweise Betriebsinformationen eines Endgerätes und insbesondere Teile davon, wie beispielsweise Module, Files und/oder Datenbankeinträge sein. Diese müssen während des Betriebes des mobilen Endgerätes in der Regel mehrfach durch neue Objekte ersetzt beziehungsweise geändert werden. Bei jeder Veränderung des Objektes wird der Objektreferenz ein neuer Objektreferenzschlüssel zugeordnet. Das mindestens eine Objekt kann Daten, einen Datensatz, ein Programm, ein Programm-Modul und/oder Programm-Extrakte darstellen.

Bevorzugt stellt der jeweils zuletzt vergebene Objektreferenzschlüssel eine Versionsangabe der Managementeinheit dar, in der die Objektveränderungen verwaltet werden. Da die Änderungen sequentiell durch Objektreferenzschlüssel protokolliert werden und zudem alle Objekte gemeinsam verwaltet werden, sind in dem Objektreferenzschlüssel, der als letzter vergeben wurde, alle zuvor eingetragenen Änderungen ausgedrückt. Die Verwendung dieses letzten vergebenen Objektreferenzschlüssels als Versionsangabe für die gesamte Managementeinheit kann somit zuverlässig für weitere Schritte, wie der Aktualisierung auf dem mobilen Endgerät, verwendet werden.

Dem mindestens einen mobilen Endgerät wird vorzugsweise ein Gerätereferenzschlüssel - im Folgenden auch als Geräte-Update-ID bezeichnet - zugeordnet, wobei dieser in Abhängigkeit von dem oder den auf dem Endgerät gespeicherten Objekten vergeben wird. Der Gerätereferenzschlüssel wird von der zentralen Rechnereinheit, insbesondere von einer Geräteverwaltungseinheit, vergeben. Der Gerätereferenzschlüssel wird hierbei nicht sequentiell für alle mobilen Endgeräte gemeinsam vergeben. Vielmehr spiegelt der Gerätereferenzschlüssel den Versionsstand der Managementeinheit zu dem letzten Zeitpunkt der Aktualisierung des mobilen Endgerätes dar. Bei abgeschlossener Aktualisierung entspricht der Gerätereferenzschlüssel somit der Versionsangabe, das heißt dem zuletzt vergebenen Objektreferenzschlüssel. Ist noch kein Objekt auf dem mobilen Endgerät geladen, so wird der Gerätereferenzschlüssel auf Null gesetzt.

Die Verwendung eines Gerätereferenzschlüssels ist vorteilhaft, da diese Angabe ausreichend ist, um der zentralen Rechnereinheit Informationen über den Ladezustand des mobilen Endgerätes zur Verfügung zu stellen. Die Übermittlung sämtlicher Objekte an die Rechnereinheit oder der Angabe zu der Version eines jeden Objektes ist daher nicht mehr notwendig.

Die Gerätereferenzschlüssel jedes mit der zentralen Rechnereinheit zumindest zeitweise in Kommunikationsverbindung stehenden mobilen Endgerätes können in der zentralen Rechnereinheit zusammen mit einer Gerätereferenz abgelegt, vorzugsweise in eine Gerätetabelle eingetragen werden.

Vorzugsweise wird jeder Objektreferenz zusätzlich zu einem Objektreferenzschlüssel auch eine Aktionsanweisung zugeordnet, die die Veränderung des Objekts angibt. Diese Angaben werden in der Managementeinheit gespeichert und dort vorzugsweise in einer Managementtabelle eingetragen. Durch die Aktionsanweisung kann über den Objektreferenzschlüssel die Aktion ermittelt werden, die an dem Objekt durchgeführt werden muss, um dieses auf den neuesten Stand zu bringen. So kann beispielsweise die Aktionsanweisung Ändern ("Change"), Hinzufügen ("Add") oder Löschen ("Delete") lauten. Es versteht sich, dass zu unterschiedlichen Zeiten unterschiedliche Aktionsanweisungen einem einzigen Objekt beziehungsweise dessen Objektreferenz zugeordnet sein können. Diese Informationen können dazu dienen die entsprechenden Aktionen in dem mobilen Endgerät ausführen zu können. Zudem können diese Informationen gegebenenfalls auch für die Durchführung und Optimierung von Aktualisierungsvorgängen hilfreich sein.

Das erfindungsgemäße Verfahren umfasst vorzugsweise einen Aktualisierungsvorgang, in dem das oder die Objekte auf dem mindestens einen mobilen Endgerät aktualisiert werden. Diese Aktualisierung kann aufgrund der Verwaltung der Objekte in der Managementeinheit gegenüber bekannten Aktualisierungsverfahren wesentlich vereinfacht erfolgen. Hierbei kann es in der Regel ausreichen, wenn ausgewählte Objekte ausgetauscht oder geändert werden. In der Regel umfasst der Aktualisierungsvorgang einen Überprüfungsschritt, der auch als Abgleich bezeichnet werden kann. Bei diesem Abgleich wird festgestellt, ob eine Aktualisierung mindestens eines Objekts im mobilen Endgerät notwendig ist. Weiterhin umfasst der Aktualisierungsvorgang eine Übermittlung notwendiger Daten an das mobile Endgerät und das eigentliche Installieren oder Laden des neuen Objektes und/oder der Änderung eines Objektes auf dem mobilen Endgerät. Der Überprüfungsschritt und damit der Abgleich der Versionen der Objekte erfolgt bei dem erfindungsgemäßen Verfahren ausschließlich in der zentralen Rechnereinheit, die auch als Back Office bezeichnet wird, und nicht auf dem mobilen Endgerät.

Zudem wird ein solcher Zyklus bei dem erfindungsgemäßen Verfahren vorzugsweise zumindest teilweise wiederholt, so dass mehrere Aktualisierungsschritte durchgeführt werden. Die Aktualisierungsschritte werden hierbei in der Reihenfolge der Objektreferenzschlüssel der Managementeinheit durchgeführt. Da der Objektreferenzschlüssel sequentiell vergeben wird, wird auf diese Weise gewährleistet, dass sämtliche Änderungen bei der Aktualisierung Berücksichtigung finden, ohne, dass eine Überprüfung einzelner Objekte auf dem Gerät notwendig wäre. Zudem werden auf diese Weise Objekte, die gegebenenfalls bereits auf dem Gerät gespeichert sind, die aber nicht aktualisiert werden müssen, das heißt, für die kein Update vorliegt, ausgelassen. Die Aktualisierung, bei der ausschließlich Objekte behandelt werden müssen, für die ein Update vorliegt, wird bei dem erfindungsgemäßen Verfahren auf einfache Weise ermöglicht, da nur diese Objekte mit einem neuen Objektreferenzschlüssel versehen werden.

Um den Umfang der notwendigen Aktualisierung definieren zu können, weist das Verfahren vorzugsweise mindestens einen Vergleichsvorgang auf, in dem zumindest die Versionsangabe der Managementeinheit mit dem aktuellen Gerätereferenzschlüssel verglichen wird. Die Versionsangabe stellt hierbei den letzten zu diesem Zeitpunkt vergebenen Objektreferenzschlüssel dar. Stimmen die Versionsangabe der Managementeinheit und der Gerätereferenzschlüssel miteinander überein, so ist das Endgerät auf dem neuesten Stand und es bedarf keiner Aktualisierung.

Wird allerdings eine Abweichung zwischen den Angaben festgestellt, so definiert der aktuelle Gerätereferenzschlüssel den Anfang des Aktualisierungsvorgangs. Dies bedeutet, dass die Aktionsanweisung und das Objekt, die durch den Objektreferenzschlüssel, der in der Managementeinheit auf den Gerätereferenzschlüssel folgt, angegeben sind, auf das mobile Endgerät zu laden sind und dort implementiert werden müssen. Durch den Beginn der Aktualisierung erst mit dem, dem Gerätereferenzschlüssel entsprechenden, Objektreferenzschlüssel kann sicher gestellt werden, dass bereits auf dem mobilen Endgerät vorgesehene Objekte, an denen keine Änderung vorgenommen wurde, nicht erneut an das mobile Endgerät gesendet werden müssen.

Die Aktualisierung wird so lange durchgeführt, bis die Versionsangabe der Managementeinheit erreicht ist, das heißt der Gerätereferenzschlüssel mit dem aktuellen, zuletzt vergebenen Objektreferenzschlüssel übereinstimmt. Zu diesem Zeitpunkt ist das mobile Endgerät dann auf dem neuesten Stand.

Die sukzessive Aktualisierung, die erfindungsgemäß möglich ist, kann dadurch gewährleistet werden, dass während des Aktualisierungsvorgangs in jedem Schritt beziehungsweise Zyklus ein Objekt aufgerufen wird, dessen Objektreferenz mit einem Objektreferenzschlüssel versehen ist, der auf den aktuellen Gerätereferenzschlüssel folgt. Das so aufgerufene Objekt und/oder die Aktionsanweisung betreffend dieses Objekt werden an das mobile Endgerät übermittelt.

In jedem Aktualisierungsschritt wird nur ein Objekt und/oder nur eine Aktionsanweisung betreffend dieses Objekt an das mobile Endgerät übermittelt. Durch die Aufteilung der Aktualisierungen, wird die Aktualisierung störungssicher. Wird beispielsweise die Kommunikationsverbindung während einer Übertragung unterbrochen, so kann die Aktualisierung mit dem Schritt fortgesetzt werden, der vor der Unterbrechung ausgeführt wurde.

Als weitere Sicherheit wird, nach dem Erhalt des Objektes und/oder der Aktionsanweisung an dem mobilen Endgerät, von diesem eine Bestätigung über den Erhalt des Objektes und/oder der Aktionsanweisung an die zentrale Rechnereinheit übermittelt. Hierzu übermittelt das mobile Endgerät vorzugsweise den Ob;lektreferenzschlüssel, der dem erhaltenen Objekt und der erhaltenen Aktionsanweisung zugeordnet war und zusammen mit diesen an das mobile Endgerät übermittelt wurde, an die zentrale Rechnereinheit. Dieser Objektreferenzschlüssel kann dann als der aktuelle Gerätereferenzschlüssel in der zentralen Rechnereinheit abgelegt werden.

Bei jedem Aktualisierungsschritt des Aktualisierungsvorgangs wird gemäß einer Ausführungsform ein Vergleich in der Managementtabelle durchgeführt. Bei diesem Vergleich wird die zu bearbeitende Objektreferenz mit allen nach dieser in der Managementtabelle aufgenommenen Objektreferenzen verglichen. Wird eine Übereinstimmung der zu bearbeitenden Objektreferenz mit einer nach dieser in der Managementtabelle enthaltenen Objektreferenz erkannt, so wird der Objektreferenzschlüssel, der dieser Objektreferenz zugeordnet ist, bei der Aktualisierung übersprungen. Auf diese Weise kann der Aktualisierungsvorgang auf ein Minimum beschränkt werden, indem die erste Aktionsanweisung übersprungen und damit nicht übertragen und nicht ausgeführt wird.

Gemäß einer Ausführungsform kann der Aktualisierungsvorgang durch das mobile Endgerät initialisiert werden. Somit kann der Benutzer in regelmäßigen Abständen sein mobiles Endgerät auf den neuesten Stand bringen. Bei der Kommunikation zwischen dem mobilen Endgerät und der zentralen Rechnereinheit ist es erfindungsgemäß ausreichend, wenn das mobile Endgerät ausschließlich eine Gerätereferenz und gegebenenfalls zusätzlich einen aktuellen Gerätereferenzschlüssel an die zentrale Rechnereinheit übermittelt. Eine Übertragung der gesamten auf dem mobilen Endgerät gespeicherten Objekte beziehungsweise Objektreferenzen ist somit nicht notwendig.

Der Aktualisierungsvorgang kann alternativ oder zusätzlich bei der Herstellung einer Kommunikationsverbindung mit der zentralen Rechnereinheit von der Managementeinheit initialisiert werden. Dies stellt ein automatisches Update beziehungsweise eine automatische Aktualisierung bei Herstellung der Kommunikationsverbindung dar.

Bei Veränderung eines Objekts kann in der Geräteverwaltungseinheit zu denjenigen Geräteeinträgen eine Markierung zugefügt wird, deren in der Geräteverwaltung abgelegte Gerätereferenzschlüssel von der aktuellen Versionsangabe der Managementeinheit abweichen. Die Markierung kann beispielsweise in Form des Setzens eines Flags vorgenommen werden. Durch eine solche Markierung kann bei der Herstellung der Kommunikationsverbindung oder bei der Initiierung der Aktualisierung durch das mobile Endgerät auf einen Vergleich zwischen dem Gerätereferenzschlüssel und der Versionsangabe verzichtet werden. Die Aktualisierung kann daher schneller erfolgen.

Die Übermittlung zwischen der zentralen Rechnereinheit und dem mobilen Endgerät kann über eine Luftschnittstelle erfolgen. Diese Art der Datenübertragung macht das vorliegende Verfahren flexibler. Die Übertragung über die Luftschnittstelle ist bei dem erfindungsgemäßen Verfahren möglich, da die Menge der zu übertragenden Daten minimiert wird und ein Sicherheitsmechanismus für gegebenenfalls auftretende Störungen realisiert werden kann.

Das erfindungsgemäße Verfahren kann zum Erfassen von Fahrzeugen in einem Bereich und/oder für ein Navigationssystem verwendet wird. Insbesondere beim Erfassen von Fahrzeugen in einem Bereich, das beispielsweise zur Ermittlung einer Streckennutzungsgebühr dienen kann, werden in der Regel eine große Anzahl unterschiedlicher Endgeräte, so genannte On-Board-Units, verwendet. Zudem sind auch Endgeräte der gleichen Art nicht zu jedem Zeitpunkt mit den gleichen Programmversionen versehen. Gerade bei dieser diversifizierten Gerätesituation ist das erfindungsgemäße Verfahren vorteilhaft.

Gemäß einem weiteren Aspekt betrifft die Erfindung ein System zum Verwalten von Objekten für mindestens ein mobiles Endgerät, wobei das System mindestens eine zentrale Rechnereinheit aufweist, wobei die Rechnereinheit mindestens eine Objektverwaltungseinheit und mindestens eine Geräteverwaltungseinheit aufweist. Das erfindungsgemäße System zeichnet sich dadurch aus, dass die zentrale Rechnereinheit zumindest eine Managementeinheit für die Verwaltung von Objektveränderungen aufweist, wobei die Managementeinheit für die Objektveränderungen so ausgelegt ist, dass diese einen Objektreferenzschlüssel erstellen kann, der die aktuelle Version aller Objekte der zentralen Rechnereinheit widerspiegelt. Dies kann insbesondere durch sukzessives Eintragen entsprechender Angaben über die Änderung eines Objektes in eine Tabelle oder eine Matrix erfolgen.

Die zentrale Rechnereinheit weist vorzugsweise zumindest eine Aktualisierungseinheit auf, die zumindest eine Vergleichseinheit für den Vergleich der Versionsangabe der Managementeinheit mit einem Gerätereferenzschlüssel eines mobilen Endgerätes, das zumindest zeitweise mit der zentralen Rechnereinheit in Kommunikationsverbindung steht, umfasst.

Vorteilhaft weist die Aktualisierungseinheit eine Update-Einheit auf, die insbesondere dazu ausgelegt ist, die aktuelle Version mindestens eines Objekts auszuwählen und an mindestens ein mobiles Endgerät zu übermitteln.

Die Objektverwaltungseinheit kann zumindest eine Speichereinrichtung aufweisen, in der die Objekte für mobile Endgeräte abgelegt sind. Zur besseren Verwaltung der Objekte ist vorzugsweise eine Objekttabelle vorgesehen, in der jedem Objekt eine Objektreferenz zugeordnet ist. Auf diese weise können die Objektreferenzen in anderen Einheiten verwendet werden und der Eintrag des gesamten Objektes in diesen Einheiten kann vermieden werden, wodurch sich der Speicherbedarf in der zentralen Rechnereinheit und die Geschwindigkeit der Verwaltung und Aktualisierung der Objekte verringern.

Gemäß einer Ausführungsform kann das System auch mehr als eine, insbesondere mindestens zwei Managementeinheiten umfassen, wobei diese in einer gemeinsamen Rechnereinheit vorgesehen sind. Es ist erfindungsgemäß aber auch möglich, dass die mindestens zwei Managementeinheiten in unterschiedlichen separaten Rechnereinheiten vorgesehen sind. In beiden Fällen ist es vorteilhaft, die von den Managementeinheiten vergebenen Objektreferenzschlüssel mit einer zusätzlichen Identifikation zu versehen, die eine Zuordnung zu den einzelnen Managementeinheiten erlaubt. Auf diese Weise kann ein von einem Gerät übermittelter Gerätereferenzschlüssel mit den entsprechenden Objektreferenzschlüsseln beziehungsweise den Versionsangaben der entsprechenden Managementeinheiten verglichen und die entsprechenden Aktualisierungsschritte eingeleitet werden. Die mindestens zwei Managementeinheiten können unterschiedliche Objekte verwalten. Zu diesem Zweck können die Managementeinheiten, sofern diese in einer gemeinsamen Rechnereinheit vorgesehen sind, mit einer oder mit mehreren Objektverwaltungseinheiten in Verbindung stehen. Die Identifikation kann beispielsweise ein Präfix vor dem Objektreferenzschlüssel sein und eine numerische, alphabetische oder alphanumerische Zeichnfolge darstellen.

Die Einheiten des Systems können zumindest teilweise als Software beziehungsweise Programme ausgestaltet sein und auf der zentralen Rechnereinheit gespeichert sein.

Das mindestens eine mobile Endgerät ist vorzugsweise einem Kraftfahrzeug zugeordnet und stellt insbesondere eine On-Board-Unit dar. Das System ist vorzugsweise für die Verwendung in einem Gebührenerhebungsverfahren für die Erhebung von Streckennutzungsgebühren oder für ein Navigationssystem ausgelegt.

Das erfindungsgemäße System ist vorzugsweise zum Ausführen des erfindungsgemäßen Verfahrens ausgelegt.

Vorteile und Merkmale, die bezüglich des erfindungsgemäßen Verfahrens beschrieben werden, gelten entsprechend und soweit anwendbar auch für das erfindungsgemäße System und umgekehrt.

Die vorliegende Erfindung wird im Folgenden anhand der beiliegenden Zeichnungen erläutert. Es zeigen:
Figur 1: ein schematisches Blockdiagramm einer Ausführungsform des erfindungsgemäßen Systems;
Figur 2: ein Flussdiagramm einer Ausführungsform des erfindungsgemäßen Verfahrens; und
Figur 3: ein schematisches Ablaufdiagramm der Ausführungsform des erfindungsgemäßen Verfahrens nach Figur 2.

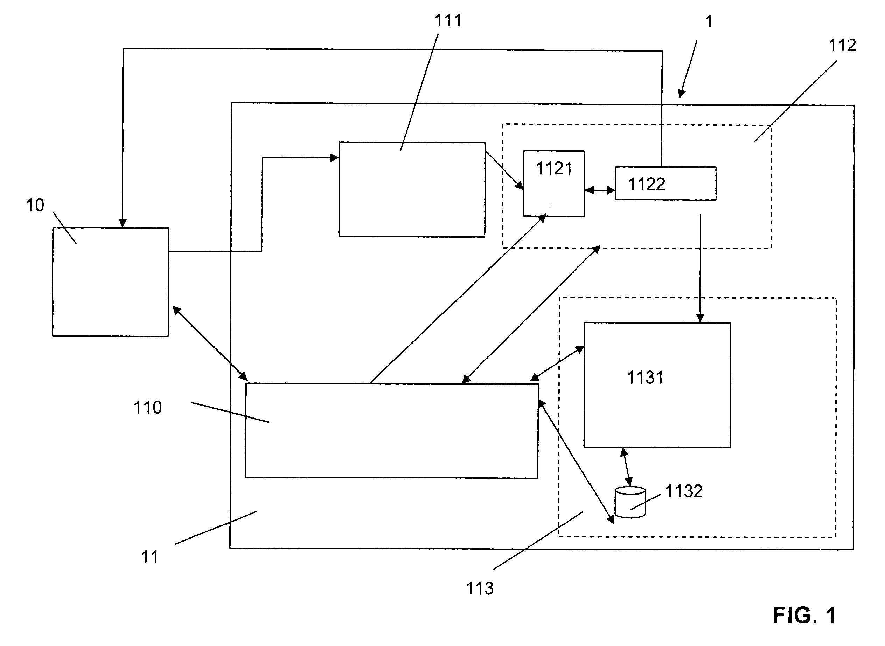

In Figur 1 ist der Aufbau eines erfindungsgemäßen Systems 1 gezeigt. Das System 1 zur Verwaltung von Objekten für ein mobiles Endgerät 10 besteht hierbei aus einer zentralen Rechnereinheit 11, die im Folgenden auch als Back-Office bezeichnet wird. In der dargestellten Ausführungsform umfasst die Rechnereinheit 11 eine Managementeinheit 110, die auch als Versionsmanagement bezeichnet wird, eine Geräteverwaltungseinheit 111, eine Aktualisierungseinheit 112 sowie eine Objektverwaltungseinheit 113. In der Geräteverwaltungseinheit 111 ist eine Gerätetabelle hinterlegt. In dieser Gerätetabelle werden alle Geräte beziehungsweise mobilen Endgeräte 10 erfasst, die von der zentralen Rechnereinheit 11 aus verwaltet werden müssen. In die Tabelle werden eine Gerätereferenz und ein Attribut zur Verwaltung, wie beispielsweise die Seriennummer des mobilen Endgerätes 10, eingetragen. Neben diesen Einträgen wird erfindungsgemäß jeder Gerätereferenz ein weiteres Attribut zugefügt. Dieses Attribut wird im folgenden auch als Gerätereferenzschlüssel bezeichnet und stellt die aktuelle Geräte-Update-ID des jeweiligen Gerätes, das heißt eine Angabe über die Version aller in dem jeweiligen Gerät 10 abgelegten Objekten, dar. Hierdurch wird der zu verwaltende und zu speichernde Datenbestand gegenüber dem Stand der Technik erheblich verringert. Ein Abspeichern der Versionsnummer eines jeden der Objekte eines mobilen Endgerätes kann nämlich entfallen. Wurden noch keine Objekte auf das Gerät geladen, so wird in die Gerätetabelle in der Spalte für den Gerätereferenzschlüssel beziehungsweise die Geräte-Update-ID als Initialwert Null eingetragen.

Ein Beispiel einer Geräte-Tabelle ist in der folgenden Tabelle 1 gezeigt:

**Tabelle 1**

| Gerätereferenz | Attribute zur Verwaltung (z.B. Seriennummer) | Gerätereferenzschlüssel (Geräte-Update-ID) |
|---|---|---|
| 12345 | ................. | 3 |
| 12346 | ................. | 6 |
| 12347 | ................. | 5 |

In der weiterhin vorgesehenen Objektverwaltungseinheit 113 sind eine Objekttabelle 1131 und ein Objekt-Pool 1132 vorgesehen. In der Objekttabelle werden sämtlichen Objekten Referenzen, so genannte Objektreferenzen, zugeordnet. Durch diese Zuordnung ist es nicht notwendig die gesamten Objekte für weitere Verwendungen in Tabellen zu laden, sondern die Aufnahme der Objektreferenz ist ausreichend. Die Objekte selber können in dem erfindungsgemäßen System in einem Objekt-Pool, der in Figur 1 schematisch als Speicher angedeutet ist, gehalten werden. Dieser Objektpool 1132 kann einen beliebigen Container, zum Beispiel ein Verzeichnis auf der Festplatte oder in der Datenbank, sein. Mit Hilfe der Objekttabelle kann in weiteren Schritten unter Bezugnahme auf die Objektreferenz das diesem zugeordnete Objekt ermittelt und gegebenenfalls aus dem Objektpool 1132 geladen werden.

Ein wichtiger Bestandteil des erfindungsgemäßen Systems 1 ist die Managementeinheit 110. Diese umfasst zumindest eine so genannte Update-Tabelle. In diese Tabelle werden stets sequentiell alle anfallenden Änderungen von Objekten eingetragen. Dieser Eintrag umfasst die Objektreferenz des entsprechenden Objektes sowie die Aktionsangabe. Zu beachten ist, dass nicht die Objekte an sich in die Update-Tabelle geschrieben werden, sondern nur Verweise auf diese Objekte in Form der Objektreferenz. Die Aktionsangabe gibt über Update-Aktionen Auskunft. Als Aktionen können Hinzufügen (Add), Entfernen (Delete) oder Ändern (Change) verwendet werden. Jeder Eintrag enthält zusätzlich einen eindeutigen Objektreferenzschlüssel, der im Folgenden auch als Update-ID bezeichnet wird. Diese Update-ID umfasst vorzugsweise einen numerischen Wert, der bei jedem neuen Update, das heißt bei jeder Veränderung eines Objektes um Eins erhöht wird. Die letzte Update-ID beziehungsweise der letzte Objektreferenzschlüssel gibt somit eine globale Versionsnummer für das gesamte System 1 an.

Bei der Initialisierung des erfindungsgemäßen Systems wird zunächst ein kompletter Satz an Objekten in die Datenbank, insbesondere in die Update-Tabelle, geschrieben, wobei in die Update-Tabelle ausschließlich die Objektreferenzen geschrieben werden, während die Objekte selber in dem Objektpool abgelegt werden können. Somit wird in der Update-Tabelle eine Liste von Objektreferenzen erstellt, wobei der letzte Eintrag, das heißt der diesem zugeordnete Objektreferenzschlüssel, den Versionsstand des Systems zum Zeitpunkt der Initialisierung darstellt. Werden beispielsweise drei Objekte mittels ihrer Objektreferenzen in die Update-Tabelle aufgenommen und werden diesen numerische Schlüssel zugeteilt, so wäre der Initial-Versionsstand n = 3.

Ein Beispiel einer solchen Update-Tabelle ist in der folgenden Tabelle 2 gezeigt:

**Tabelle 2**

| Objektreferenzschlüssel (Update-ID) | Objektreferenz | Aktionsangabe |
|---|---|---|
| 1 | 4711 | Add |
| 2 | 4712 | Add |
| 3 | 4713 | Add |

Erfolgen Änderungen an den Objekten, so werden diese stets in der Update-Tabelle protokolliert, das heißt angefügt. Dabei erhält jeder neue Eintrag in die Update-Tabelle einen neuen Objektreferenzschlüssel.

Eine Update-Tabelle nach dem Eintrag von Änderungen ist in Tabelle 3 wiedergegeben:

**Tabelle 3**

| Objektreferenzschlüssel (Update-ID) | Objektreferenz | Aktionsangabe |
|---|---|---|
| Initial-Versionsstand: n | | |
| n+1 | 4711 | Change |
| n+2 | 4712 | Delete |
| n+3 | 12987 | Add |

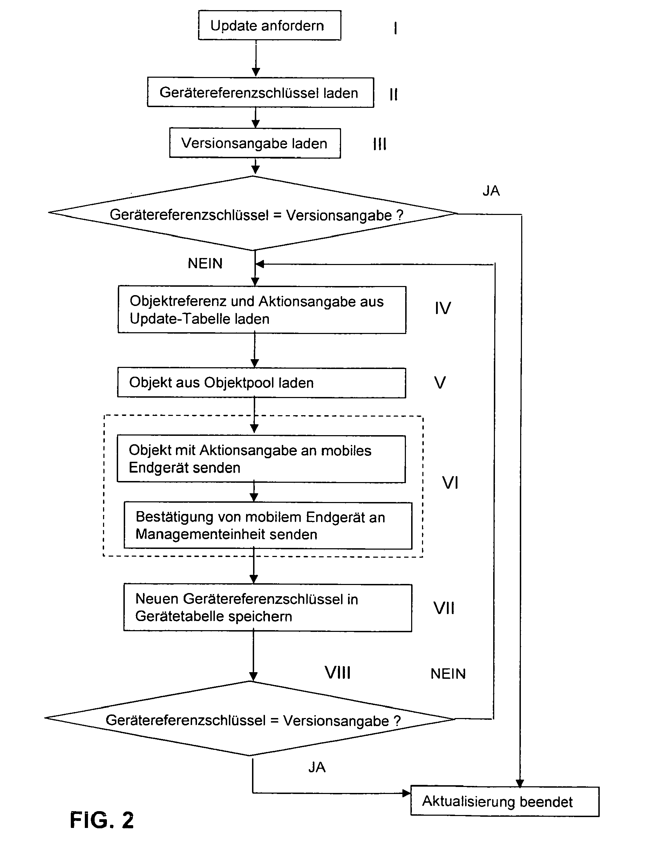

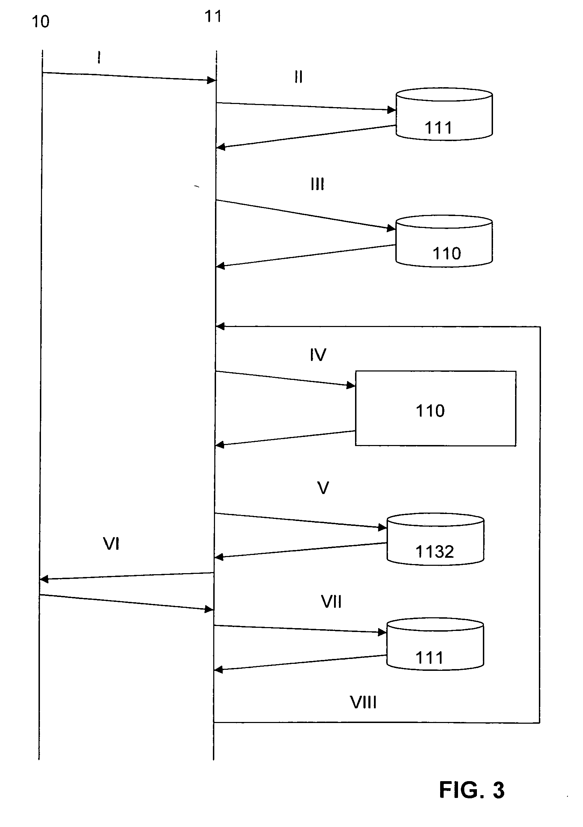

Schließlich sind in der Aktualisierungseinheit 112 eine Vergleichseinheit 1121 und eine Update-Einheit 1122 vorgesehen. Deren Funktionsweise wird später unter Bezugnahme auf Figuren 2 und 3 beschrieben.

Die Einheiten sind in der dargestellten Ausführungsform als separate Einheiten dargestellt, sind aber miteinander zum Austausch von Daten verbunden und können erfindungsgemäß auch zumindest teilweise zusammengefasst sein.

Das mobile Endgerät 10, das im Folgenden auch als OBU bezeichnet wird, steht in der dargestellten Ausführungsform des erfindungsgemäßen Systems mit der zentralen Rechnereinheit 11 in Kommunikationsverbindung. Die Kommunikation erfolgt hierbei über eine Luftschnittstelle.

Eine Ausführungsform des erfindungsgemäßen Verfahrens wird nun unter Bezugnahme auf die Figuren 2 und 3 beschrieben.

Sobald ein mobiles Endgerät 10 mit der zentralen Rechnereinheit 11, das heißt mit dem Back-Office, kommuniziert, wird in der Vergleichseinheit 1121 der Objektreferenzschlüssel der Managementeinheit 110 mit dem Gerätereferenzschlüssel des mobilen Endgerätes 10 verglichen. Ist der Gerätereferenzschlüssel des Endgerätes 10 kleiner als der Objektreferenzschlüssel des Versionsmanagement, so ist ein Update vorhanden und das mobile Endgerät muss aktualisiert werden.

Der eigentliche Update-Prozess beziehungsweise Aktualisierungsvorgang ist abhängig von den Kommunikationsmöglichkeiten des mobilen Endgerätes mit der zentralen Rechnereinheit. Insbesondere ist auf das zur Verfügung stehende Protokoll, die Telegrammlänge und die Fragmentierung zu achten. In jedem Fall müssen aber folgende Schritte durchgeführt werden:

Das mobile Endgerät 10 fordert, falls dieses der Initiator ist, in einem ersten Schritt 1, ein Update an. Ist hingegen die zentrale Rechnereinheit 11 der Initiator, so ist der erste Schritt das Erkennen der Herstellung der Kommunikationsverbindung mit dem mobilen Endgerät 10.

In beiden Fällen wird die Gerätereferenz von dem mobilen Endgeräte 10 an die zentrale Rechnereinheit 11 und in dieser in einem Schritt II an die Geräteverwaltungseinheit 111 übermittelt. In der Geräteverwaltungseinheit 111 wird aus der Geräte-Tabelle der aktuelle Gerätereferenzschlüssel gelesen und dieser als Startwert an die Updateeinheit 1122 geladen. Weiterhin wird in Schritt III der letzte Objektreferenzschlüssel, das heißt die globale Update-ID beziehungsweise die Versionsangabe, aus der Update-Tabelle ausgelesen. Dieser Wert wird als Endwert an die Updateeinheit 1122 übermittelt. In einem nächsten Schritt wird der geladene Gerätereferenzschlüssel mit der geladenen Versionsangabe verglichen. Entspricht der Gerätereferenzschlüssel der Versionsangabe nicht. So werden in Schritt IV aus der Update-Tabelle die Objektreferenz und die Aktion geladen, die dem nächsten Objektreferenzschlüssel nach dem aktuellen Gerätereferenzschlüssel zugeordnet ist.

Ist die Aktionsanweisung "ADD" oder "CHANGE", so wird das neue beziehungsweise geänderte Objekt in Schritt V aus einem Objekt-Container 1132 geladen. Dieses Objekt wird im Schritt VI mit der diesem zugeordneten Aktionsangabe und dem Objektreferenzschlüssel an das mobile Endgerät 10 übermittelt. Ist hingegen die Aktionsanweisung "DELETE", so wird der Schritt V übersprungen und es werden unmittelbar die Objektreferenz und die Aktionsangabe mit dem Objektreferenzschlüssel an das mobile Endgerät 10 übermittelt. Erst nachdem von dem mobilen Endgerät 10 eine Bestätigung über den Erhalt des Objekts, beziehungsweise der Objektreferenz an der zentralen Rechnereinheit 11 erhalten wurde, wird in dieser der neue Gerätereferenzschlüssel für das mobile Endgerät 10 in Schritt VII gespeichert. Die Bestätigung des Erhalts des Objektes kann insbesondere durch Übermitteln der Update-ID, das heißt des Objektreferenzschlüssels, der von dem mobilen Endgerät 10 erhalten wurde, erfolgen.

Anschließend wird im Schritt VIII erneut überprüft, ob der letzte von dem mobilen Endgerät 10 erhaltene beziehungsweise für dieses Endgerät in der Gerätetabelle abgelegte Gerätereferenzschlüssel mit dem letzten Objektreferenzschlüssel der Update-Tabelle übereinstimmt. Nur, wenn diese Übereinstimmung vorliegt, wird der Update-Prozess abgeschlossen. Stimmen der Gerätereferenzschlüssel und die Versionsangabe nicht überein, werden die Schritte IV bis VIII so lange wiederholt, bis die beiden Werte übereinstimmen.

Wird während eines solchen Aktualisierungsverfahren beziehungsweise Update-Prozesses das mobile Endgerät 10 abgeschaltet oder die Übertragung von der zentralen Rechnereinheit 11 zu dem mobilen Endgerät 10 unterbrochen, so kann jederzeit bei dem zuletzt bestätigten Objektreferenzschlüssel aus Schritt VI neu aufgesetzt werden. Von der zentralen Rechnereinheit 11 aus kann somit die Aktualisierung erneut initiiert werden.

Alternativ kann auch das mobile Endgerät 10 den Aufsetzpunkt bestimmen, indem es den Gerätereferenzschlüssel der letzten erfolgreichen Aktualisierung an die zentrale Rechnereinheit 11 sendet.

Gemäß einer bevorzugten Ausführungsform kann der Fall, in dem sich ein und dasselbe Objekt mehrmals geändert hat, bevor es auf einem mobilen Endgerät aktualisiert wurde, anders behandelt werden, das heißt das Verfahren mit einer Modifikation durchgeführt werden. Die Update-Tabelle hat in diesem Fall beispielsweise das in der folgenden Tabelle 4 gezeigte Erscheinungsbild.

**Tabelle 4**

| Objektreferenzschlüssel (Update-ID) | Objektreferenz | Aktionsangabe |
|---|---|---|
| N | 4711 | Change |
| n+1 | 4712 | Delete |
| n+2 | 4711 | Change |
| n+3 | 4711 | Delete |

Um das gleiche Objekt, in diesem Beispiel das Objekt mit der Objektreferenz 4711, in einem Update-Zyklus nicht mehrmals an das mobile Endgerät übertragen zu müssen, kann ein Überprüfungsschritt eingeführt werden, bei dem erkannt wird, ob das Objekt, das der momentan zu bearbeitenden Update-ID zugeordnet ist, in der Update-Tabelle ein weiteres Mal aufgeführt ist. Wird erkannt, dass dieses Objekt in der Update-Tabelle mit einer höheren Update-ID erneut enthalten ist, wird das Objekt mit der geringeren Update-ID zunächst übersprungen. Erst wenn keine höhere Update-ID mit diesem Objekt vorliegt, werden das Objekt und die Aktionsanweisung mit der Update-ID oder bei der Aktionsanweisung "DELETE" nur die Update-ID mit der Aktionsanweisung an das mobile Endgerät 10 übertragen. In dem gezeigten Beispiel würde zunächst die Update-ID n übersprungen und mit der Aktionsanweisung entsprechend der Update-ID n+1 fortgefahren. Anschließend würde erneut die Update-ID n+2 übersprungen und erst die Objektreferenz und die Aktionsangabe entsprechend der Update-ID n+3 übermittelt. Das Objekt 4711, würde daher gelöscht.

Die vorliegende Erfindung ist nicht auf die dargestellten Ausführungsformen beschränkt.

Insbesondere, wenn das mobile Endgerät in einer verteilten Umgebung eingesetzt wird, das heißt dass es mehrere unabhängige Versionsmanagement-Systeme gibt, die jeweils unterschiedliche Objekte verwalten, wird der Objektreferenzschlüssel, das heißt die Update-ID, mit einem Präfix versehen. Dieses Präfix erlaubt dann die eindeutige Zuordnung zu jedem der Versionsmanagement-Systeme. Die Versionsmanagementsysteme können in einer gemeinsamen Rechnereinheit vorgesehen sein oder auf separaten Rechnereinheiten vorliegen.

Weiterhin ist es möglich, außer dem Gerätereferenzschlüssel in die Gerätetabelle ein weiteres Attribut einzufügen. Dieses kann insbesondere das Setzten ein so genanntes Flag sein. Hierdurch kann angezeigt werden, ob ein Update vorhanden ist, das heißt eines der Objekte geändert wurde. Bei jeder Änderung in der Update-Tabelle wird bei allen Geräten, deren eigener Gerätereferenzschlüssel kleiner ist, als die Versionsangabe der Update-Tabelle, ein Flag gesetzt. Bei der Kommunikation mit dem mobilen Endgerät kann somit sehr schnell geprüft werden, ob ein Update vorhanden ist, ohne jedes Mal die aktuellen Update-ID's aus dem Versionsmanagement mit dem Gerätereferenzschlüssel vergleichen zu müssen.

Wird ein Flag verwendet, so kann der Vergleich des Gerätereferenzschlüssels des Endgerätes mit der Update-ID des Versionsmanagement entfallen. In diesem Fall ist lediglich auf das Vorhandensein eines gesetzten Flags abzustellen. In den einzelnen Update-Zyklen kann der genannte Vergleich aber weiterhin durchgeführt werden, um eine Störungssicherheit beispielsweise bei Unterbrechung der Kommunikationsverbindung zu dem mobilen Endgerät gewährleisten zu können.

Mit dem erfindungsgemäßen Verfahren und System kann dieser Update-Mechanismus auch noch bei sehr großer Anzahl, wie beispielsweise von mehr als einer Millionen mobilen Endgeräten mit geringem Aufwand beherrscht werden.

### Bezugszeichenliste

- 1: System
- 10: mobiles Endgerät

- 11: zentrale Rechnereinheit

- 110: Managementeinheit

- 111: Geräteverwaltungseinheit

- 112: Aktualisierungseinheit
- 1121: Vergleichseinheit
- 1122: Update-Einheit

- 113: Objektverwaltungseinheit
- 1131: Objekttabelle
- 1132: Objektpool

## Patentansprüche

1. Verfahren zum Verwalten von Objekten für mindestens ein mobiles Endgerät (10), wobei das mobile Endgerät (10) mit zumindest einer zentralen Rechnereinheit (11) zumindest zeitweise in Kommunikationsverbindung steht, **dadurch gekennzeichnet, dass** in der zentralen Rechnereinheit (11) jedem Objekt eine Referenz zugeordnet wird und die Objektreferenzen so abgelegt werden, dass bei Veränderung eines Objekts in einer Managementeinheit (110), in der die Veränderungen aller Objekte gemeinsam verwaltet werden, der Objektreferenz, die diesem Objekt zugeordnet ist, ein Objektreferenzschlüssel zugeordnet wird, wobei die Objektreferenzschlüssel fortlaufend unabhängig von dem Objekt vergeben werden.

2. Verfahren nach Anspruch 1, **dadurch gekennzeichnet, dass** der jeweils zuletzt vergebene Objektreferenzschlüssel eine Versionsangabe der Managementeinheit (110) darstellt, in der die Objektveränderungen verwaltet werden.

3. Verfahren nach einem der Ansprüche 1 oder 2, **dadurch gekennzeichnet, dass** dem mindestens einen mobilen Endgerät (10) ein Gerätereferenzschlüssel zugeordnet wird, wobei dieser in Abhängigkeit von dem oder den auf dem Endgerät (10) gespeicherten Objekten vergeben wird.

4. Verfahren nach einem der Ansprüche 1 bis 3, **dadurch gekennzeichnet, dass** jeder Objektreferenz zusätzlich zu einem Objektreferenzschlüssel auch eine Aktionsanweisung zugeordnet wird, die die Veränderung des Objekts angibt.

5. Verfahren nach einem der Ansprüche 1 bis 4, **dadurch gekennzeichnet, dass** das Verfahren einen Aktualisierungsvorgang umfasst, in dem das oder die Objekte auf dem mindestens einen mobilen Endgerät (10) aktualisiert werden.

6. Verfahren nach Anspruch 5, **dadurch gekennzeichnet, dass** in dem Aktualisierungsvorgang Aktualisierungsschritte (IV-VIII) in der Reihenfolge der Objektreferenzschlüssel der Managementeinheit (110) durchgeführt werden.

7. Verfahren nach einem der Ansprüche 3 bis 6, **dadurch gekennzeichnet, dass** das Verfahren mindestens einen Vergleichsvorgang umfasst, in dem die Versionsangabe der Managementeinheit (110) mit dem aktuellen Gerätereferenzschlüssel verglichen wird.

8. Verfahren nach einem der Ansprüche 6 oder 7, **dadurch gekennzeichnet, dass** der aktuelle Gerätereferenzschlüssel den Anfang des Aktualisierungsvorgangs definiert.

9. Verfahren nach einem der Ansprüche 6 bis 8, **dadurch gekennzeichnet, dass** die Versionsangabe der Managementeinheit (110) das Ende des Aktualisierungsvorgangs definiert.

10. Verfahren nach einem der Ansprüche 6 bis 9, **dadurch gekennzeichnet, dass** während des Aktualisierungsvorgangs in jedem Schritt ein Objekt aufgerufen wird, dessen Objektreferenz mit einem Objektreferenzschlüssel versehen ist, der auf den aktuellen Gerätereferenzschlüssel folgt.

11. Verfahren nach Anspruch 10, **dadurch gekennzeichnet, dass** das aufgerufene Objekt und/oder die Aktionsanweisung betreffend dieses Objekt an das mobile Endgerät (10) übermittelt wird.

12. Verfahren nach Anspruch 10 oder 11, **dadurch gekennzeichnet, dass** in jedem Aktualisierungsschritt nur ein Objekt und/oder nur eine Aktionsanweisung betreffend dieses Objekt an das mobile Endgerät (10) übermittelt wird.

13. Verfahren nach Anspruch 11 oder 12, **dadurch gekennzeichnet, dass** nach dem Erhalt des Objektes und/oder der Aktionsanweisung an dem mobilen Endgerät (10), dieses eine Bestätigung über den Erhalt des Objektes und/oder der Aktionsanweisung an die zentrale Rechnereinheit (11) übermittelt.

14. Verfahren nach einem der Ansprüche 3 bis 13, **dadurch gekennzeichnet, dass** die Gerätereferenzschlüssel jedes mit der zentralen Rechnereinheit (11) zumindest zeitweise in Kommunikationsverbindung stehenden mobilen Endgerätes (10) in der zentralen Rechnereinheit (11) zusammen mit einer Gerätereferenz abgelegt, vorzugsweise in eine Gerätetabelle eingetragen, werden.

15. Verfahren nach einem der Ansprüche 1 bis 14, **dadurch gekennzeichnet, dass** der Objektreferenzschlüssel, die Objektreferenz und gegebenenfalls eine dem Objektreferenzschlüssel zugeordnete Aktionsanweisung in der Managementeinheit (110) gespeichert, vorzugsweise in einer Managementtabelle eingetragen werden.

16. Verfahren nach einem der Ansprüche 1 bis 15, **dadurch gekennzeichnet, dass** vor der Initialisierung eines jeden Aktualisierungsschrittes des Aktualisierungsvorgangs ein Vergleich in der Managementtabelle durchgeführt wird, bei dem die zu bearbeitende Objektreferenz mit allen nach dieser in der Managementtabelle aufgenommenen Objektreferenzen verglichen wird und beim Erkennen einer Übereinstimmung der Objektreferenzen der der zu bearbeitenden Objektreferenz zugeordnete Objektreferenzschlüssel übersprungen wird.

17. Verfahren nach einem der Ansprüche 5 bis 16, **dadurch gekennzeichnet, dass** der Aktualisierungsvorgang durch das mobile Endgerät (10) initialisiert wird.

18. Verfahren nach einem der Ansprüche 1 bis 17, **dadurch gekennzeichnet, dass** das mobile Endgerät (10) an die zentrale Rechnereinheit (11) ausschließlich eine Gerätereferenz und gegebenenfalls zusätzlich einen aktuellen Gerätereferenzschlüssel übermittelt.

19. Verfahren nach einem der Ansprüche 5 bis 18, **dadurch gekennzeichnet, dass** der Aktualisierungsvorgang bei der Herstellung einer Kommunikationsverbindung mit der zentralen Rechnereinheit (11) von der Managementeinheit initialisiert wird.

20. Verfahren nach einem der Ansprüche 1 bis 22, **dadurch gekennzeichnet, dass** bei Veränderung eines Objekts in einer Geräteverwaltungseinheit eine Markierung zu denjenigen Geräteeinträgen zugefügt wird, deren in der Geräteverwaltung abgelegte Gerätereferenzschlüssel von der aktuellen Versionsangabe der Managementeinheit (110) abweichen.

21. Verfahren nach einem der Ansprüche 1 bis 20, **dadurch gekennzeichnet, dass** der Objektreferenzschlüssel eine numerische, eine alphabetische oder eine alphanumerische Zeichenfolge darstellt.

22. Verfahren nach einem der Ansprüche 1 bis 21, **dadurch gekennzeichnet, dass** das mindestens eine Objekt einzelne Daten, einen Datensatz, ein Programm, ein Programm-Modul und/oder ein Programm-Extrakt darstellt.

23. Verfahren nach einem der Ansprüche 1 bis 22, **dadurch gekennzeichnet, dass** die Übermittlung zwischen der zentralen Rechnereinheit (11) und dem mobilen Endgerät (10) über eine Luftschnittstelle erfolgt.

24. Verfahren nach einem der Ansprüche 1 bis 23, **dadurch gekennzeichnet, dass** dieses zum Erfassen von Fahrzeugen in einem Bereich und/oder für ein Navigationssystem verwendet wird.

25. System zum Verwalten von Objekten für mindestens ein mobiles Endgerät, wobei das System mindestens eine zentrale Rechnereinheit (11) aufweist, wobei die Rechnereinheit (11) mindestens eine Objektverwaltungseinheit (113) und mindestens eine Geräteverwaltungseinheit (111) aufweist, **dadurch gekennzeichnet, dass** die zentrale Rechnereinheit (11) zumindest eine Managementeinheit (110) für die Verwaltung von Objektveränderungen aufweist, wobei die Managementeinheit (110) für die Objektveränderungen so ausgelegt ist, dass diese einen Objektreferenzschlüssel erstellen kann, der die aktuelle Version aller Objekte der zentralen Rechnereinheit (110) widerspiegelt.

26. System nach Anspruch 25, **dadurch gekennzeichnet, dass** die zentrale Rechnereinheit (11) zumindest eine Aktualisierungseinheit (112) aufweist, die zumindest eine Vergleichseinheit (1121) für den Vergleich der Versionsangabe der Managementeinheit (110) mit einem Gerätereferenzschlüssel eines mobilen Endgerätes (10), das zumindest zeitweise mit der zentralen Rechnereinheit (11) in Kommunikationsverbindung steht, umfasst.

27. System nach Anspruch 26, **dadurch gekennzeichnet, dass** die Aktualisierungseinheit (112) eine Update-Einheit (1122) aufweist, die insbesondere dazu ausgelegt ist, die aktuelle Version mindestens eines Objekts auszuwählen und an mindestens ein mobiles Endgerät (10) zu übermitteln.

28. System nach einem der Ansprüche 25 bis 27, **dadurch gekennzeichnet, dass** die Objektverwaltungseinheit (113) zumindest eine Speichereinrichtung (1132) aufweist, in der die Objekte für mobile Endgeräte (10) abgelegt sind.

29. System nach einem der Ansprüche 25 bis 28, **dadurch gekennzeichnet, dass** das System (1) mindestens zwei Managementeinheiten (110) umfasst, wobei diese in einer Rechnereinheit (11) vorgesehen sind.

30. System nach einem der Ansprüche 25 bis 29, **dadurch gekennzeichnet, dass** die Einheiten (110, 111, 112, 113) des Systems zumindest teilweise als Programme ausgestaltet sind.

31. System nach einem der Ansprüche 25 bis 30, **dadurch gekennzeichnet, dass** das mindestens eine mobile Endgerät (10) einem Kraftfahrzeug zugeordnet ist und insbesondere eine On-Board-Unit darstellt.

32. System nach einem der Ansprüche 25 bis 31, **dadurch gekennzeichnet, dass** das System (1) für die Verwendung in einem Gebührenerhebungsverfahren für die Erhebung von Streckennutzungsgebühren oder für ein Navigationssystem ausgelegt ist.

33. System nach einem der Ansprüche 25 bis 32, **dadurch gekennzeichnet, dass** dieses zum Ausführen des Verfahrens nach einem der Ansprüche 1 bis 24 ausgelegt ist.
